# EUROPÄISCHE PATENTSCHRIFT

(11) **EP 3 541 680 B1**
(45) Veröffentlichungstag und Bekanntmachung des Hinweises auf die Patenterteilung: **26.01.2022**
(21) Anmeldenummer: 17842288.7
(22) Anmeldetag: 19.12.2017
(51) Int. Cl.: B61L 7/06, B61L 19/06, B61L 27/00, B61L 15/00

(54) **VERFAHREN UND EISENBAHNKOMPONENTE ZUM ÜBERTRAGEN VON NACHRICHTEN**
METHOD AND RAILWAY COMPONENT FOR TRANSMITTING MESSAGES
PROCÉDÉ ET COMPOSANT FERROVIAIRE DE TRANSMISSION DE MESSAGES

(30) Priorität: 17.01.2017 DE 102017200630
(43) Veröffentlichungstag der Anmeldung: 25.09.2019
(73) Patentinhaber: Siemens Mobility GmbH, 81739 München (DE)
(72) Erfinder: HARSCH, Waldemar, 30519 Hannover (DE)
(86) Internationale Anmeldenummer: PCT/EP2017/083476
(87) Internationale Veröffentlichungsnummer: WO 2018/134013

(56) Entgegenhaltungen:
- WO-A1-2016/129086
- US-A1- 2014 005 915

## Beschreibung

Die Erfindung bezieht sich auf ein Verfahren zum Übertragen von Nachrichten.

Ein Verfahren zum Kommunizieren aus Dokument US 2014 005 915 A1 umfasst das Übertragen einer Befehlsnachricht von einem Führungsfahrzeug an entfernte Fahrzeuge in einem Fahrzeugverbund. Antwortnachrichten werden von den entfernten Fahrzeugen an das führende Fahrzeug übertragen. Die Antwortnachrichten enthalten den Status der entfernten Fahrzeuge, die die Antwortnachrichten gesendet haben. Der Status eines ersten entfernten Fahrzeugs, jedoch nicht des zweiten entfernten Fahrzeugs, wird am Führungsfahrzeug empfangen, und der Status eines zweiten entfernten Fahrzeugs wird am ersten entfernten Fahrzeug empfangen. Der Status des zweiten entfernten Fahrzeugs wird in dem ersten entfernten Fahrzeug gespeichert, und eine Wiederholungsnachricht wird von dem führenden Fahrzeug an die entfernten Fahrzeuge übertragen. Die Wiederholungsnachricht wird vom ersten entfernten Fahrzeug empfangen und eine Wiederholungsnachricht wird von dem ersten entfernten Fahrzeug an das führende Fahrzeug übertragen, das den Status des zweiten entfernten Fahrzeugs enthält.

Der Erfindung liegt die Aufgabe zugrunde, ein Verfahren anzugeben, das es ermöglicht, im Falle von kurzzeitigen Übertragungsstörungen ein auf der Basis der Nachrichtenübertragung arbeitendes technisches System, beispielsweise eine Eisenbahnanlage, sicher weiter betreiben zu können.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass in jeder Nachricht jeweils eine aktuelle Information und jeweils nochmals die in der unmittelbar vorherigen Nachricht als aktuelle Information übersandte Information übermittelt wird.

Ein wesentlicher Vorteil des erfindungsgemäßen Verfahrens besteht darin, dass dieses einen Weiterbetrieb einer technischen Anlage, die für einen sicheren Betrieb den vollständigen Empfang aller Nachrichten erfordert, auch dann ermöglicht, wenn im Falle von kurzzeitigen Übertragungsstörungen einzelne Nachrichten empfängerseitig nicht empfangen werden können. Erfindungsgemäß werden nämlich Informationen nicht nur einmal, sondern zwei- oder - je nach Ausführungsvariante des Verfahrens - mehrfach übersandt, so dass empfängerseitig Informationen, die zunächst nicht korrekt übertragen wurden oder nicht oder zumindest nicht vollständig empfangen werden konnten, aus nachfolgend empfangenen Nachrichten gewonnen werden können.

Das beschriebene Verfahren wird vorzugsweise im Bereich der Eisenbahntechnik eingesetzt, um im Falle von nur kurzzeitigen Übertragungsstörungen einen weiteren Betrieb einer Eisenbahnanlage zu ermöglichen und eine Betriebsunterbrechung sowie die daraus resultierenden Verspätungen zu vermeiden; demgemäß wird es also als vorteilhaft angesehen, wenn im Rahmen des beschriebenen Verfahrens Nachrichten zwischen Komponenten einer Eisenbahnanlage übermittelt werden.

Die Nachrichten werden vorzugsweise in Form von Datentelegrammen übermittelt, beispielsweise gemäß einem der folgenden Übertragungsstandards: RFC 768 - User Datagram Protocol, RFC 791 - INTERNET PROTOCOL, RFC 793 - TRANSMISSION CONTROL PROTOCOL oder RFC 2460 - Internet Protocol, Version 6 (IPv6)

Vorzugsweise werden in jeder Nachricht in Ergänzung zur aktuellen Information sowohl die in der unmittelbar vorherigen Nachricht als aktuelle Information übersandte Information als auch zusätzlich die in einer oder mehreren anderen vorherigen (vorvorherige, usw.) Nachrichten als aktuelle Information übersandten Informationen übersandt. Bei dieser Ausgestaltung kann der Übertragungsausfall auch im Falle zweier oder mehrerer hintereinander verloren gegangener Nachrichten technisch verkraftet werden. Mit anderen Worten werden in jeder Nachricht also vorzugsweise jeweils übermittelt:
- die aktuelle Information,
- nochmals die in der unmittelbar vorherigen Nachricht als aktuelle Information übersandte Information und
- zusätzlich mindestens nochmals eine Information, die in einer weiteren der vorherigen Nachrichten als aktuelle Information übersandt worden war.

Die Eisenbahnanlage weist vorzugsweise streckenseitige Komponenten sowie ein die streckenseitigen Komponenten steuerndes Stellwerk auf.

Bei der letztgenannten Ausgestaltung der Eisenbahnanlage wird es als vorteilhaft angesehen, wenn die streckenseitigen Komponenten in jeder Nachricht an das Stellwerk jeweils eine aktuelle Zustandsinformation über den Betriebszustand der Komponente oder eine aktuelle Betriebsbereitschaftsinformation sowie zusätzlich die in der letzten Nachricht übersandte Zustandsinformation oder Betriebsbereitschaftsinformation an das Stellwerk übersenden.

Bei der letztgenannten Ausgestaltung der Eisenbahnanlage wird es - alternativ oder zusätzlich - auch als vorteilhaft angesehen, wenn das Stellwerk in jeder Nachricht an eine streckenseitige Komponente jeweils eine aktuelle Befehlsinformation oder eine aktuelle Betriebsbereitschaftsinformation sowie zusätzlich die in der letzten Nachricht übersandte Befehlsinformation oder Betriebsbereitschaftsinformation an die jeweilige streckenseitige Komponente übersendet.

Auch kann das Verfahren in vorteilhafter Weise bei einer Eisenbahnanlage eingesetzt werden, die zumindest zwei Stellwerke aufweist; bei einer solchen Eisenbahnanlage werden die Nachrichten vorzugsweise zwischen den Stellwerken oder zumindest auch zwischen den Stellwerken übermittelt.

Jedes Stellwerk übersendet vorzugsweise in jeder Nachricht an ein anderes Stellwerk jeweils eine aktuelle Stellwerksinformation oder eine aktuelle Betriebsbereitschaftsinformation sowie zusätzlich die in der letzten Nachricht übersandte Stellwerksinformation oder Betriebsbereitschaftsinformation an das jeweils andere Stellewerk.

Auch kann das Verfahren in vorteilhafter Weise bei einer Eisenbahnanlage eingesetzt werden, bei der auf einem Schienenabschnitt ein Schienenfahrzeug fährt; die Nachrichten werden in diesem Fall vorzugsweise zwischen dem Schienenfahrzeug und einem Stellwerk oder zumindest auch zwischen dem Schienenfahrzeug und dem Stellwerk übermittelt.

Vorzugsweise wird das Schienenfahrzeug in jeder Nachricht an das Stellwerk jeweils eine aktuelle Fahrzeuginformation oder eine aktuelle Betriebsbereitschaftsinformation sowie zusätzlich die in der letzten Nachricht übersandte Fahrzeuginformation oder Betriebsbereitschaftsinformation an das Stellwerk übersenden. Die Fahrzeuginformationen umfassen vorzugsweise Angaben bezüglich des fahrzeugseitig ermittelten Orts des Schienenfahrzeugs und/oder der fahrzeugseitig ermittelten Geschwindigkeit des Schienenfahrzeugs.

Auch ist es vorteilhaft, wenn das Stellwerk in jeder Nachricht an das Schienenfahrzeug jeweils eine aktuelle Befehlsinformation oder eine aktuelle Betriebsbereitschaftsinformation sowie zusätzlich die in der letzten Nachricht übersandte Befehlsinformation oder Betriebsbereitschaftsinformation an das Schienenfahrzeug übersendet.

Darüber hinaus kann das Verfahren in vorteilhafter Weise bei einer Eisenbahnanlage eingesetzt werden, bei der auf einem Schienenabschnitt zumindest zwei Schienenfahrzeuge fahren. Die Nachrichten werden in diesem Falle vorzugsweise zwischen den Schienenfahrzeugen oder zumindest auch zwischen den Schienenfahrzeugen übermittelt.

Vorteilhaft ist es insbesondere, wenn jedes Schienenfahrzeug in jeder Nachricht an ein anderes Schienenfahrzeug jeweils eine aktuelle Fahrzeuginformation oder eine aktuelle Betriebsbereitschaftsinformation sowie zusätzlich die in der letzten Nachricht übersandte Fahrzeuginformation oder Betriebsbereitschaftsinformation an das jeweils andere Schienenfahrzeug übersendet.

Die Erfindung bezieht sich außerdem auf eine Eisenbahnkomponente für eine Eisenbahnanlage gemäß Anspruch 14.

Bezüglich der Vorteile der erfindungsgemäßen Eisenbahnkomponente sei auf die obigen Ausführungen im Zusammenhang mit dem erfindungsgemäßen Verfahren verwiesen.

Die Eisenbahnkomponente ist bevorzugt ein Stellwerk, eine streckenseitige Komponente oder ein Schienenfahrzeug.

Die Erfindung wird nachfolgend anhand von Ausführungsbeispielen näher erläutert; dabei zeigen beispielhaft
- Figur 1: anhand eines schematisch in einer Draufsicht dargestellten Ausführungsbeispiels für eine Eisenbahnanlage ein erstes Ausführungsbeispiel für das erfindungsgemäße Verfahren,
- Figur 2: anhand der Eisenbahnanlage gemäß Figur 1 ein zweites Ausführungsbeispiel für das erfindungsgemäße Verfahren,
- Figur 3: anhand der Eisenbahnanlage gemäß Figur 1 ein drittes Ausführungsbeispiel für das erfindungsgemäße Verfahren,
- Figur 4: anhand eines schematisch in einer Draufsicht dargestellten weiteren Ausführungsbeispiels für eine Eisenbahnanlage ein viertes Ausführungsbeispiel für das erfindungsgemäße Verfahren.

In den Figuren werden der Übersicht halber für identische oder vergleichbare Komponenten stets dieselben Bezugszeichen verwendet.

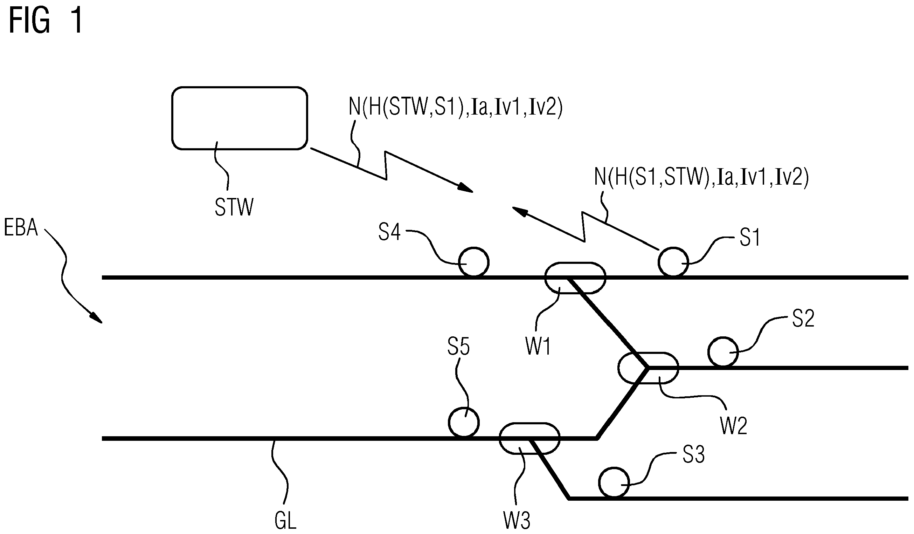

Die Figur 1 zeigt in einer schematischen Draufsicht ein Ausführungsbeispiel für eine Eisenbahnanlage EBA.

Die Eisenbahnanlage EBA umfasst zusätzlich zu Gleisen GL streckenseitige Komponenten, von denen in der Figur 1 beispielhaft Signale S1, S2, S3, S4 und S5 sowie Weichen W1, W2 und W3 dargestellt sind. Die streckenseitigen Komponenten werden von einem Stellwerk STW überwacht und gesteuert.

Um die Überwachung und Steuerung der streckenseitigen Komponenten durch das Stellwerk STW zu ermöglichen, tauschen die streckenseitigen Komponenten jeweils mit dem Stellwerk STW Nachrichten aus. Die Nachrichten können bezüglich der Übertragungstechnik beliebig übertragen werden, beispielsweise drahtgebunden bzw. über Kabel oder alternativ oder zusätzlich mittels Funk.

Bei der Übertragung der Nachrichten wird zur Redundanzerhöhung in jeder Nachricht jeweils eine aktuelle Information Ia sowie zusätzlich nochmals zumindest die in der letzten Nachricht übersandte Information übersandt. Bei dem Ausführungsbeispiel gemäß Figur 1 wird beispielhaft davon ausgegangen, dass zusätzlich zu der aktuellen Information Ia jeweils zwei vorherige Informationen mitübersandt werden, nämlich die vorherige Information Iv1, die in der vorherigen Nachricht als aktuelle Information übersandt worden war, und die vorvorherige Information Iv2, die in der vorvorherigen Nachricht als aktuelle Information übersandt worden war. Alternativ kann lediglich auch nur eine einzige vorherige Information übermittelt werden, oder es können mehr als zwei vorherige Informationen übermittelt werden.

Dies soll nachfolgend beispielhaft anhand der Nachrichtenübertragung zwischen dem Stellwerk STW und dem Signal S1 näher erläutert werden; die nachfolgende Beschreibung gilt für die Informationsübertragung zwischen dem Stellwerk STW und den anderen streckenseitigen Komponenten, also den Signalen S2, S3, S4 und S5 sowie den Weichen W1, W2 und W3, entsprechend.

Die Figur 1 zeigt beispielhaft, dass das Stellwerk STW mit jeder Nachricht N(H(STW,S1),Ia,Iv1,Iv2) an das Signal S1 jeweils übersendet:
- eine aktuelle Information Ia, bei der es sich vorzugsweise um eine aktuelle Befehlsinformation oder eine aktuelle Betriebsbereitschaftsinformation des Stellwerks STW handelt,
- die jeweils vorherige Information Iv1, bei der es sich demgemäß um die vorherige Befehlsinformation oder die vorherige Betriebsbereitschaftsinformation des Stellwerks STW handelt, sowie
- die jeweils vorvorherige Information Iv2, bei es sich demgemäß um die vorvorherige Befehlsinformation oder die vorvorherige Betriebsbereitschaftsinformation des Stellwerks STW handelt.

Jede Nachricht N(H(STW,S1),Ia,Iv1,Iv2) enthält darüber hinaus vorzugsweise Adressinformationen H(STW,S1), die anzeigen, dass die Nachricht vom Stellwerk STW stammt und an das Signal S1 gerichtet ist.

In entsprechender Weise arbeitet das Signal S1: So zeigt die Figur 1 beispielhaft, dass das Signal S1 mit jeder Nachricht N(H(S1,STW),Ia,Iv1,Iv2) an das Stellwerk STW jeweils übersendet:
- eine aktuelle Information Ia, bei der es sich vorzugsweise um eine aktuelle Zustandsinformation über den Betriebszustand des Signals S1 oder eine aktuelle Betriebsbereitschaftsinformation des Signals S1 handelt,
- die jeweils vorherige Information Iv1, bei der es sich demgemäß um die vorherige Zustandsinformation über den Betriebszustand des Signals S1 oder die vorherige Betriebsbereitschaftsinformation des Signals S1 handelt, sowie
- die jeweils vorvorherige Information Iv2, bei es sich demgemäß um die vorvorherige Zustandsinformation über den Betriebszustand des Signals S1 oder die vorvorherige Betriebsbereitschaftsinformation des Signals S1 handelt.

Jede Nachricht N(H(S1,STW),Ia,Iv1,Iv2) enthält darüber hinaus vorzugsweise Adressinformationen H(S1,STW), die anzeigen, dass die Nachricht vom Signal S1 stammt und an das Stellwerk STW gerichtet ist.

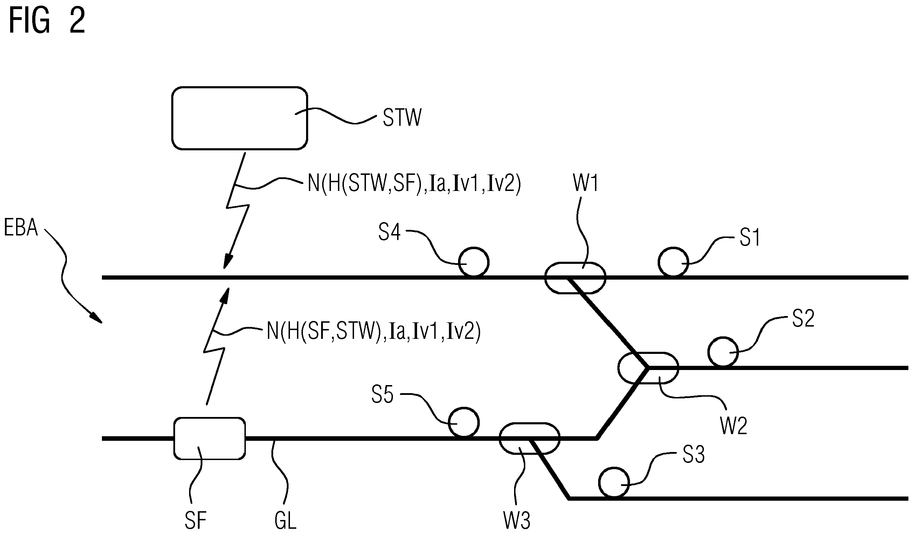

Die Figur 2 zeigt die Eisenbahnanlage EBA gemäß Figur 1 sowie ein auf den Gleisen GL fahrendes Schienenfahrzeug SF.

Um die Überwachung und Steuerung des Schienenfahrzeugs SF durch das Stellwerk STW zu ermöglichen oder zumindest auch zu ermöglichen oder zu vereinfachen, tauschen das Schienenfahrzeug SF und das Stellwerk STW jeweils Nachrichten aus. Die Nachrichten können bezüglich der Übertragungstechnik beliebig übertragen werden, beispielsweise drahtgebunden bzw. über im Gleis GL verlegte Kabel - beispielsweise im Rahmen bekannter punktförmiger oder linienförmiger Zugbeeinflussungstechniken, wie sie allgemein bekannt und bereits im Einsatz sind, oder (alternativ oder zusätzlich) mittels Funk.

Bei der Übertragung der Nachrichten wird zur Redundanzerhöhung in jeder Nachricht jeweils eine aktuelle Information Ia sowie zusätzlich nochmals zumindest die in der letzten Nachricht übersandte Information übersandt. Bei dem Ausführungsbeispiel gemäß Figur 2 wird beispielhaft davon ausgegangen, dass zusätzlich zu der aktuellen Information Ia jeweils zwei vorherige Informationen mitübersandt werden, nämlich die vorherige Information Iv1, die in der vorherigen Nachricht als aktuelle Information übersandt worden war, und die vorvorherige Information Iv2, die in der vorvorherigen Nachricht als aktuelle Information übersandt worden war.

Dies soll nachfolgend beispielhaft anhand der Nachrichtenübertragung zwischen dem Stellwerk STW und dem Schienenfahrzeug SF näher erläutert werden.

Die Figur 2 zeigt beispielhaft, dass das Stellwerk STW mit jeder Nachricht N(H(STW,SF1),Ia,Iv1,Iv2) an das Schienenfahrzeug SF jeweils übersendet:
- eine aktuelle Information Ia, bei der es sich vorzugsweise um eine aktuelle Befehlsinformation oder eine aktuelle Betriebsbereitschaftsinformation des Stellwerks STW handelt,
- die jeweils vorherige Information Iv1, bei der es sich demgemäß um die vorherige Befehlsinformation oder die vorherige Betriebsbereitschaftsinformation des Stellwerks STW handelt, sowie
- die jeweils vorvorherige Information Iv2, bei es sich demgemäß um die vorvorherige Befehlsinformation oder die vorvorherige Betriebsbereitschaftsinformation des Stellwerks STW handelt.

Jede Nachricht N(H(STW,SF),Ia,Iv1,Iv2) enthält darüber hinaus vorzugsweise Adressinformationen H(STW,SF), die anzeigen, dass die Nachricht vom Stellwerk STW stammt und an das Schienenfahrzeug SF gerichtet ist.

In entsprechender Weise arbeitet das Schienenfahrzeug SF: So zeigt die Figur 2 beispielhaft, dass das Schienenfahrzeug SF mit jeder Nachricht N(H(SF,STW),Ia,Iv1,Iv2) an das Stellwerk STW jeweils übersendet:
- eine aktuelle Information Ia, bei der es sich vorzugsweise um eine aktuelle Fahrzeuginformation des Schienenfahrzeugs SF oder eine aktuelle Betriebsbereitschaftsinformation des Schienenfahrzeugs SF handelt,
- die jeweils vorherige Information Iv1, bei der es sich demgemäß um die vorherige Fahrzeuginformation des Schienenfahrzeugs SF oder die vorherige Betriebsbereitschaftsinformation des Schienenfahrzeugs SF handelt, sowie
- die jeweils vorvorherige Information Iv2, bei es sich demgemäß um die vorvorherige Fahrzeuginformation des Schienenfahrzeugs SF oder die vorvorherige Betriebsbereitschaftsinformation des Schienenfahrzeugs SF handelt.

Die Fahrzeuginformationen umfassen vorzugsweise Angaben bezüglich des fahrzeugseitig ermittelten Orts des Schienenfahrzeugs SF und/oder der fahrzeugseitig ermittelten Geschwindigkeit des Schienenfahrzeugs SF.

Jede Nachricht N(H(SF,STW),Ia,Iv1,Iv2) enthält darüber hinaus vorzugsweise Adressinformationen H(SF,STW), die anzeigen, dass die Nachricht vom Schienenfahrzeug SF stammt und an das Stellwerk STW gerichtet ist.

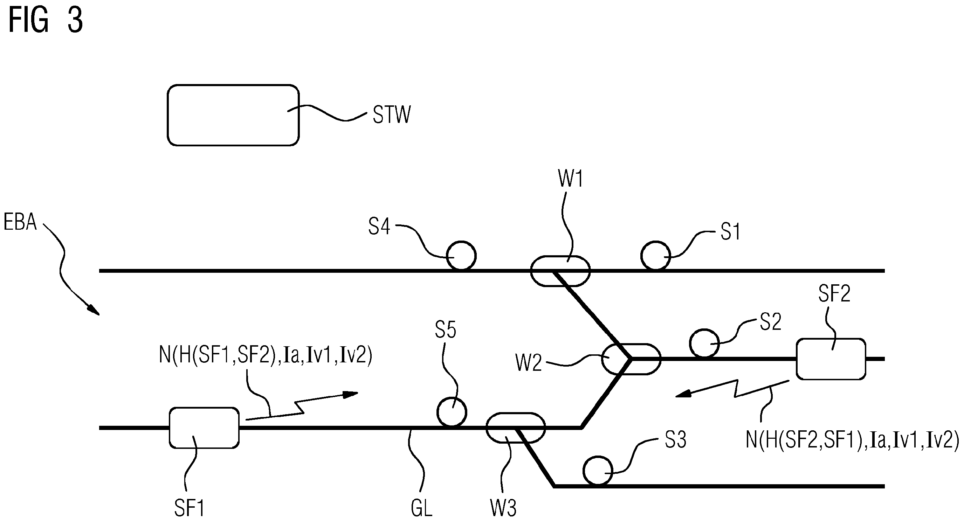

Die Figur 3 zeigt die Eisenbahnanlage EBA gemäß Figur 1 sowie ein auf den Gleisen GL fahrendes erstes Schienenfahrzeug SF1 und ein auf den Gleisen GL fahrendes zweites Schienenfahrzeug SF2.

Um eine selbstständige - sei es völlig autark ohne das Stellwerk STW oder teilautark unter Einbezug des Stellwerks STW - Überwachung und Steuerung der Schienenfahrzeuge SF1 und SF2 untereinander zu ermöglichen, tauschen die Schienenfahrzeuge SF1 und SF2 jeweils Nachrichten aus. Die Nachrichten können bezüglich der Übertragungstechnik beliebig übertragen werden, beispielsweise drahtgebunden bzw. über im Gleis GL verlegte Kabel - beispielsweise im Rahmen bekannter punktförmiger oder linienförmiger Zugbeeinflussungstechniken, wie sie allgemein bekannt und bereits im Einsatz sind, oder (alternativ oder zusätzlich) mittels Funk.

Bei der Übertragung der Nachrichten wird zur Redundanzerhöhung in jeder Nachricht jeweils eine aktuelle Information Ia sowie zusätzlich nochmals zumindest die in der letzten Nachricht übersandte Information übersandt. Bei dem Ausführungsbeispiel gemäß Figur 3 wird beispielhaft davon ausgegangen, dass zusätzlich zu der aktuellen Information Ia jeweils zwei vorherige Informationen mitübersandt werden, nämlich die vorherige Information Iv1, die in der vorherigen Nachricht als aktuelle Information übersandt worden war, und die vorvorherige Information Iv2, die in der vorvorherigen Nachricht als aktuelle Information übersandt worden war.

Dies soll nachfolgend beispielhaft anhand der Nachrichtenübertragung vom ersten Schienenfahrzeug SF1 zum zweiten Schienenfahrzeug SF2 näher erläutert werden. Die Figur 3 zeigt beispielhaft, dass das erste Schienenfahrzeug SF1 mit jeder Nachricht N(H(SF1,SF2),Ia,Iv1,Iv2) an das zweite Schienenfahrzeug SF jeweils übersendet:
- eine aktuelle Information Ia, bei der es sich vorzugsweise um eine aktuelle Fahrzeuginformation des ersten Schienenfahrzeugs SF1 oder eine aktuelle Betriebsbereitschaftsinformation des ersten Schienenfahrzeugs SF1 handelt,
- die jeweils vorherige Information Iv1, bei der es sich demgemäß um die vorherige Fahrzeuginformation oder die vorherige Betriebsbereitschaftsinformation des ersten Schienenfahrzeugs SF1 handelt, sowie
- die jeweils vorvorherige Information Iv2, bei es sich demgemäß um die vorvorherige Fahrzeuginformation oder die vorvorherige Betriebsbereitschaftsinformation des ersten Schienenfahrzeugs SF1 handelt.

Jede Nachricht N(H(SF1,SF2),Ia,Iv1,Iv2) enthält darüber hinaus vorzugsweise Adressinformationen H(SF1,SF2), die anzeigen, dass die Nachricht vom ersten Schienenfahrzeug SF1 stammt und an das zweite Schienenfahrzeug SF2 gerichtet ist.

Das zweite Schienenfahrzeug SF2 arbeitet in entsprechender Weise und sendet an das erste Schienenfahrzeug SF1 entsprechende Nachrichten, die in der Figur 3 mit dem Bezugszeichen N(H(SF2,SF1),Ia,Iv1,Iv2) gekennzeichnet sind. Die obigen Ausführungen im Zusammenhang mit Figur 2 gelten entsprechend.

Im Übrigen können die Schienenfahrzeuge SF1 und SF2 auch mit dem Stellwerk STW Nachrichten austauschen, wie dies oben im Zusammenhang mit der Figur 2 erläutert wurde, um das Stellwerk STW in die Überwachung und Steuerung einzubeziehen.

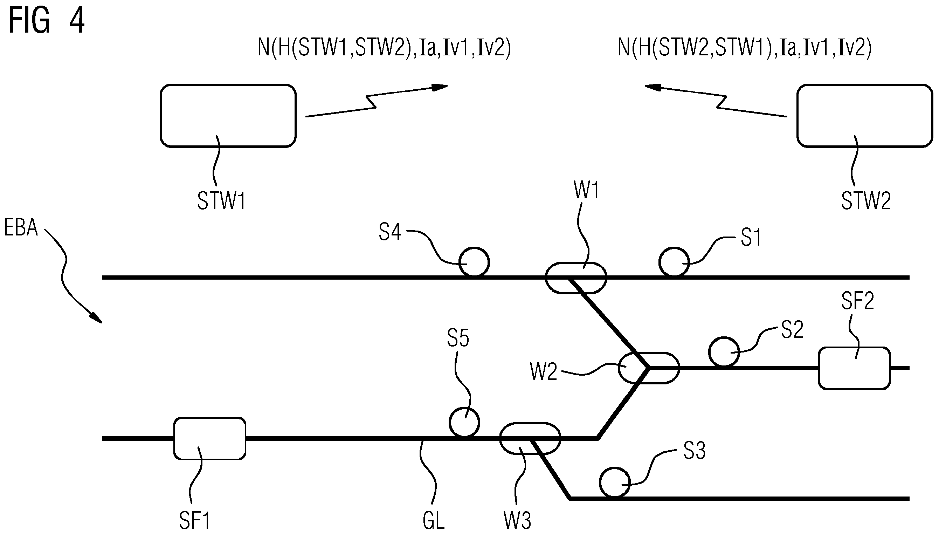

Die Figur 4 zeigt in einer schematischen Draufsicht ein weitere Ausführungsbeispiel für eine Eisenbahnanlage EBA. Die Eisenbahnanlage EBA gemäß Figur 4 umfasst Gleise GL, Signale S1, S2, S3, S4 und S5, Weichen W1, W2 und W3, ein erstes Stellwerk STW1 und ein zweites Stellwerk STW2. Auf den Gleisen GL fahren bei der Darstellung gemäß Figur 4 ein erstes Schienenfahrzeug SF1 und ein zweites Schienenfahrzeug SF2.

Um die Überwachung und Steuerung der Eisenbahnanlage EBA, insbesondere der streckenseitigen Komponenten und der Schienenfahrzeuge SF1 und SF2 durch die beiden Stellwerke STW1 und STW2 zu ermöglichen oder zumindest zu vereinfachen, tauschen die beiden Stellwerke STW1 und STW2 jeweils Nachrichten aus. Die Nachrichten können bezüglich der Übertragungstechnik beliebig übertragen werden, beispielsweise drahtgebunden bzw. über Kabel werden und/oder mittels Funk.

Bei der Übertragung der Nachrichten wird zur Redundanzerhöhung in jeder Nachricht jeweils eine aktuelle Information Ia sowie zusätzlich nochmals zumindest die in der letzten Nachricht übersandte Information übersandt. Bei dem Ausführungsbeispiel gemäß Figur 4 wird beispielhaft davon ausgegangen, dass zusätzlich zu der aktuellen Information Ia jeweils zwei vorherige Informationen mitübersandt werden, nämlich die vorherige Information Iv1, die in der vorherigen Nachricht als aktuelle Information übersandt worden war, und die vorvorherige Information Iv2, die in der vorvorherigen Nachricht als aktuelle Information übersandt worden war.

Dies soll nachfolgend beispielhaft anhand der Nachrichtenübertragung zwischen dem ersten Stellwerk STW1 und dem zweiten Stellwerk STW2 näher erläutert werden.

Die Figur 4 zeigt beispielhaft, dass das erste Stellwerk STW1 mit jeder Nachricht N(H(STW1,STW2),Ia,Iv1,Iv2) an das zweite Stellwerk STW2 jeweils übersendet:
- eine aktuelle Information Ia, bei der es sich vorzugsweise um eine aktuelle Stellwerksinformation oder eine aktuelle Betriebsbereitschaftsinformation des ersten Stellwerks STW1 handelt,
- die jeweils vorherige Information Iv1, bei der es sich demgemäß um die vorherige Stellwerksinformation oder die vorherige Betriebsbereitschaftsinformation des ersten Stellwerks STW1 handelt, sowie
- die jeweils vorvorherige Information Iv2, bei es sich demgemäß um die vorvorherige Stellwerksinformation oder die vorvorherige Betriebsbereitschaftsinformation des ersten Stellwerks STW1 handelt.

Jede Nachricht N(H(STW1,STW2),Ia,Iv1,Iv2) enthält darüber hinaus vorzugsweise Adressinformationen H(STW1,STW2), die anzeigen, dass die Nachricht vom ersten Stellwerk STW1 stammt und an das zweite Stellwerk STW2 gerichtet ist.

Das zweite Stellwerk STW2 arbeitet in analoger bzw. entsprechender Weise und sendet an das erste Stellwerk STW1 entsprechende Nachrichten, die mit dem Bezugszeichen N(H(STW2,STW1), Ia,Iv1,Iv2) gekennzeichnet sind.

Im Übrigen können auch die Schienenfahrzeuge SF1 und SF2 auch bei dem Ausführungsbeispiel gemäß Figur 4 untereinander, mit den beiden Stellwerken STW1 und STW2 oder mit zumindest einem der beiden Stellwerke Nachrichten austauschen, wie dies oben im Zusammenhang mit der Figur 2 erläutert wurde. Die streckenseitigen Komponenten können mit beiden Stellwerken STW1 und STW2 oder alternativ nur mit einem der beiden Stellwerke kommunizieren.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung, wie in den folgenden Ansprüchen definiert, zu verlassen.

## Patentansprüche

1. Verfahren zum Übertragen von Nachrichten,
**dadurch gekennzeichnet, dass**
• in jeder Nachricht jeweils eine aktuelle Information (Ia) und jeweils nochmals die in der unmittelbar vorherigen Nachricht als aktuelle Information übersandte Information (Iv1) übermittelt wird, wobei
• empfängerseitig Informationen (Iv1), die zunächst nicht korrekt übertragen wurden oder nicht oder zumindest nicht vollständig empfangen werden konnten, aus der nachfolgenden Nachricht (Ia) gewonnen werden.

2. Verfahren nach Anspruch 1,
**dadurch gekennzeichnet, dass** Nachrichten zwischen Komponenten (S1-S4, W1-W3, SF, SF1, SF2, STW, STW1, STW2) einer Eisenbahnanlage (EBA) übermittelt werden.

3. Verfahren nach Anspruch 2,
**dadurch gekennzeichnet, dass** die Eisenbahnanlage (EBA) streckenseitige Komponenten (S1-S4,W1-W3) sowie ein die streckenseitigen Komponenten (S1-S4,W1-W3) steuerndes Stellwerk (STW, STW1, STW2) aufweist.

4. Verfahren nach Anspruch 3,
**dadurch gekennzeichnet, dass** die streckenseitigen Komponenten (S1-S4,W1-W3) in jeder Nachricht an das Stellwerk (STW, STW1, STW2) jeweils eine aktuelle Zustandsinformation über den Betriebszustand der Komponente (S1-S4,W1-W3) oder eine aktuelle Betriebsbereitschaftsinformation sowie zusätzlich die in der letzten Nachricht übersandte Zustandsinformation oder Betriebsbereitschaftsinformation an das Stellwerk (STW, STW1, STW2) übersenden.

5. Verfahren nach einem der voranstehenden Ansprüche 3 bis 4,
**dadurch gekennzeichnet, dass** das Stellwerk (STW, STW1, STW2) in jeder Nachricht an eine streckenseitige Komponente (S1-S4,W1-W3) jeweils eine aktuelle Befehlsinformation oder eine aktuelle Betriebsbereitschaftsinformation sowie zusätzlich die in der letzten Nachricht übersandte Befehlsinformation oder Betriebsbereitschaftsinformation an die jeweilige streckenseitige Komponente (S1-S4,W1-W3) übersendet.

6. Verfahren nach einem der voranstehenden Ansprüche,
**dadurch gekennzeichnet, dass**
- die Eisenbahnanlage (EBA) zumindest zwei Stellwerke (STW1, STW2) aufweist und
- die Nachrichten zwischen den Stellwerken (STW1, STW2) übermittelt werden.

7. Verfahren nach Anspruch 6,
**dadurch gekennzeichnet, dass** jedes Stellwerk (STW1, STW2) in jeder Nachricht an ein anderes Stellwerk (STW1, STW2) jeweils eine aktuelle Stellwerksinformation oder eine aktuelle Betriebsbereitschaftsinformation sowie zusätzlich die in der letzten Nachricht übersandte Stellwerksinformation oder Betriebsbereitschaftsinformation an das jeweils andere Stellewerk übersendet.

8. Verfahren nach einem der voranstehenden Ansprüche,
**dadurch gekennzeichnet, dass**
- auf einem Schienenabschnitt der Eisenbahnanlage (EBA) zumindest ein Schienenfahrzeug (SF, SF1, SF2) fährt, und
- die Nachrichten zwischen dem Schienenfahrzeug (SF, SF1, SF2) und einem Stellwerk (STW, STW1, STW2) übermittelt werden.

9. Verfahren nach Anspruch 8,
**dadurch gekennzeichnet, dass** das Schienenfahrzeug (SF, SF1, SF2) in jeder Nachricht an das Stellwerk (STW, STW1, STW2) jeweils eine aktuelle Fahrzeuginformation oder eine aktuelle Betriebsbereitschaftsinformation sowie zusätzlich die in der letzten Nachricht übersandte Fahrzeuginformation oder Betriebsbereitschaftsinformation an das Stellwerk (STW, STW1, STW2) übersendet.

10. Verfahren nach einem der voranstehenden Ansprüche 8 bis 9,
**dadurch gekennzeichnet, dass** das Stellwerk (STW, STW1, STW2) in jeder Nachricht an das Schienenfahrzeug (SF, SF1, SF2) jeweils eine aktuelle Befehlsinformation oder eine aktuelle Betriebsbereitschaftsinformation sowie zusätzlich die in der letzten Nachricht übersandte Befehlsinformation oder Betriebsbereitschaftsinformation an das Schienenfahrzeug (SF, SF1, SF2) übersendet.

11. Verfahren nach einem der voranstehenden Ansprüche,
**dadurch gekennzeichnet, dass**
- auf einem Schienenabschnitt der Eisenbahnanlage (EBA) zumindest zwei Schienenfahrzeuge (SF1, SF2) fahren und
- die Nachrichten zwischen den Schienenfahrzeugen (SF1, SF2) übermittelt werden.

12. Verfahren nach Anspruch 11,
**dadurch gekennzeichnet, dass** jedes Schienenfahrzeuge (SF1, SF2) in jeder Nachricht an ein anderes Schienenfahrzeug (SF1, SF2) jeweils eine aktuelle Fahrzeuginformation oder eine aktuelle Betriebsbereitschaftsinformation sowie zusätzlich die in der letzten Nachricht übersandte Fahrzeuginformation oder Betriebsbereitschaftsinformation an das jeweils andere Schienenfahrzeug (SF1, SF2) übersendet.

13. Verfahren nach einem der voranstehenden Ansprüche,
**dadurch gekennzeichnet, dass** in jeder Nachricht jeweils übermittelt wird:
- die aktuelle Information (Ia),
- nochmals die in der unmittelbar vorherigen Nachricht als aktuelle Information übersandte Information (Iv1) und
- zusätzlich mindestens nochmals eine Information (Iv2), die in einer weiteren vorherigen Nachricht als aktuelle Information übersandt worden war.

14. Eisenbahnkomponente für eine Eisenbahnanlage (EBA),
**dadurch gekennzeichnet, dass** die Eisenbahnkomponente derart ausgestaltet ist, dass sie
• Nachrichten aussenden kann, wobei sie in jeder ausgesandten Nachricht jeweils eine aktuelle Information (Ia) und jeweils zumindest nochmals die in der unmittelbar vorherigen Nachricht als aktuelle Information übersandte Information (Iv1) übermittelt,
• empfängerseitig Informationen (Iv1), die zunächst nicht korrekt übertragen wurden oder nicht oder zumindest nicht vollständig empfangen werden konnten, aus der nachfolgenden Nachricht (Ia) gewinnen kann.

15. Eisenbahnkomponente nach Anspruch 14,
**dadurch gekennzeichnet, dass** die Eisenbahnkomponente ein Stellwerk (STW, STW1, STW2), eine streckenseitige Komponente (S1-S4,W1-W3) oder ein Schienenfahrzeug (SF, SF1, SF2) ist.

## Claims

1. Method for transmission of messages,
**characterised in that**,
• in each message, a current item of information (Ia) is transmitted in each case and the information (iv1) sent as current information in the immediately preceding message is transmitted once again, wherein
• on the receiver side, information (Iv1), which has initially not been transmitted correctly or has not been able to be received or at least not received completely, can be obtained from the subsequent message (Ia).

2. Method according to claim 1,
**characterised in that**
messages are transmitted between components (S1-S4, W1-W3, SF, SF1, SF2, STW, STW1, STW2) of a railway system (EBA).

3. Method according to claim 2,
**characterised in that**
the railway system (EBA) has trackside components (S1-S4, W1-W3) as well as an interlocking (STW, STW1, STW2) controlling the trackside components (S1-S4, W1-W3).

4. Method according to claim 3,
**characterised in that**
the trackside components (S1-S4, W1-W3), in each message to the interlocking (STW, STW1, STW2), send a current item of status information about the operational status of the components (S1-S4, W1-W3) in each case or current item of operational readiness information as well as in addition the status information or operational readiness information sent to the interlocking (STW, STW1, STW2) in the last message in each case.

5. Method according to one of the preceding claims 3 to 4,
**characterised in that**
the interlocking (STW, STW1, STW2), in each message to a trackside component (S1-S4, W1-W3), sends a current item of command information or a current item of operational readiness information as well as in addition the command information or operational readiness information sent to the respective trackside component (S1-S4, W1-W3) in the last message in each case.

6. Method according to one of the preceding claims,
**characterised in that**
- the railway system (EBA) has at least two interlockings (STW1, STW2) and
- the messages are transferred between the interlockings (STW1, STW2).

7. Method according to claim 6,
**characterised in that**
each interlocking (STW1, STW2), in each message to another interlocking (STW1, STW2), transfers a current item of interlocking information or a current item of operational readiness information in each case as well as in addition the interlocking information or operational readiness information sent in the last message to the other interlocking in each case.

8. Method according to one of the preceding claims,
**characterised in that**
- at least one rail vehicle (SF, SF1, SF2) is traveling on a section of track of the railway system (EBA), and
- the messages are transmitted between the rail vehicle (SF, SF1, SF2) and an interlocking (STW, STW1, STW2).

9. Method according to claim 8,
**characterised in that**
the rail vehicle (SF, SF1, SF2), in each message to the interlocking (STW, STW1, STW2), sends to the interlocking (STW, STW1, STW2) a current item of vehicle information or a current item of operational readiness information as well as in addition the vehicle information or operational readiness information sent in the last message in each case.

10. Method according to one of the preceding claims 8 to 9,
**characterised in that**
the interlocking (STW, STW1, STW2), in each message to the rail vehicle (SF, SF1, SF2), sends to the rail vehicle (SF, SF1, SF2) a current item of command information or a current item of operational readiness information as well as in addition the command information or operational readiness information sent in the last message in each case.

11. Method according to one of the preceding claims,
**characterised in that**
- at least two rail vehicles (SF1, SF2) are traveling on a section of track of the railway system (EBA), and
- the messages are transmitted between the rail vehicles (SF1, SF2) .

12. Method according to claim 11,
**characterised in that**
each rail vehicle (SF1, SF2), in each message to another rail vehicle (SF1, SF2), sends to the respective other rail vehicle (SF1, SF2) a current item of vehicle information or a current item of operational readiness information as well as in addition the vehicle information or operational readiness information sent in the last message in each case.

13. Method according to one of the preceding claims,
**characterised in that**
the information is transmitted in each case in each message:
- the current information (Ia),
- the information sent in the immediately preceding message as the current information (Iv1) once again and
- additionally at least one further item of information (Iv2) that had been sent in a further preceding message as current information.

14. Railway component for a railway system (EBA),
**characterised in that**
the railway component is embodied such that
• it can send out messages wherein, in each message sent out, it transfers a current item of information (Ia) in each case and at least the information (Iv1) sent out as current information in the immediately preceding message once again in each case,
• on the receiver side, information (Iv1), which has initially not been transmitted correctly or has not been able to be received or at least not received completely, can be obtained from the subsequent message (Ia).

15. Railway component according to claim 14,
**characterised in that**
the railway component is an interlocking (STW, STW1, STW2), a trackside component (S1-S4, W1-W3) or a rail vehicle (SF, SF1, SF2) .

## Revendications

1. Procédé de transmission de messages,
**caractérisé en ce que**
• on transmet dans chaque message respectivement une information (Ia) actuelle et respectivement encore une fois l'information (Iv1) transmise comme information actuelle dans le message immédiatement précédent, dans lequel
• on obtient à partir du message (Ia) suivant des informations (Iv1) du côté du récepteur, qui ont été transmises d'abord incorrectement ou qui ne pouvaient pas être reçues ou du moins ne pas l'être complètement.

2. Procédé suivant la revendication 1,
**caractérisé en ce que**
l'on transmet des messages entre des composants (S1 à S4, W1 à W3, SF, SF1, SF2, STW, STW1, STW2) d'une installation (EBA) de chemin de fer.

3. Procédé suivant la revendication 2,
**caractérisé en ce que**
l'installation (EBA) de chemin de fer a des composants (S1 à S4, W1 à W3) sur la voie ainsi qu'un poste (STW, STW1, STW2) d'aiguillage commandant les composés (S1 à S4, W1 à W3) sur la voie.

4. Procédé suivant la revendication 3,
**caractérisé en ce que**
les composants (S1 à S4, W1 à W3) sur la voie transmettent dans chaque message au poste (STW, STW1, STW2) d'aiguillage respectivement une information d'état actuel sur l'état de fonctionnement des composants (S1 à S4, W1 à W3) ou transmettent au poste (STW, STW1, STW2) d'aiguillage une information actuelle de disponibilité à fonctionner ainsi que supplémentairement l'information d'état ou l'information de disponibilité et à fonctionner transmise dans le dernier message.

5. Procédé suivant l'une des revendications 3 à 4 précédentes,
**caractérisé en ce que**
le poste (STW, STW1, STW2) d'aiguillage transmet dans chaque message à un composant (S1 à S4, W1 à W3) sur la voie respectivement une information actuelle d'instruction ou une information actuelle de disponibilité à fonctionner, ainsi que transmet supplémentairement aux composants (S1 à S4, W1 à W3) respectifs sur la voie l'information d'instruction ou l'information de disponibilité à fonctionner transmise dans le dernier message.

6. Procédé suivant l'une des revendications précédentes,
**caractérisé en ce que**
- l'installation (EBA) de chemin de fer a au moins deux postes (STW1, STW2) d'aiguillage et
- on transmet les messages entre les postes (STW1, STW2) d'aiguillage.

7. Procédé suivant la revendication 6,
**caractérisé en ce que**
chaque poste (STW1, STW2) d'aiguillage transmet respectivement à l'autre poste d'aiguillage, dans chaque message à un autre poste (STW1, STW2) d'aiguillage, respectivement une information actuelle de poste d'aiguillage une information actuelle de disponibilité à fonctionner ainsi que supplémentairement l'information de poste (STW1, STW2) d'aiguillage ou l'information de disponibilité à fonctionner transmise dans le dernier message.

8. Procédé suivant l'une des revendications précédentes,
**caractérisé en ce que**
- au moins un véhicule (SF, SF1, SF2) ferroviaire circule sur un tronçon de voie de l'installation (EBA) de chemin de fer, et
- on transmet les messages entre le véhicule (SF, SF1, SF2) ferroviaire et un poste (STW, STW1, STW2) d'aiguillage.

9. Procédé suivant la revendication 8,
**caractérisé en ce que**
le véhicule (SF, SF1, SF2) ferroviaire transmet au poste (STW STW1, STW2) d'aiguillage, dans chaque message au poste (STW, STW1, STW2) d'aiguillage, respectivement une information actuelle de véhicule ou une information actuelle de disponibilité à fonctionner ainsi que supplémentairement l'information de véhicule ou l'information de disponibilité à fonctionner transmise dans le dernier message.

10. Procédé suivant l'une des revendications 8 à 9 précédentes,
**caractérisé en ce que**
le poste (STW, STW1, STW2) d'aiguillage transmet au véhicule (SF, SF1, SF2) ferroviaire, dans chaque message, respectivement une information actuelle d'instruction ou une information actuelle de disponibilité à fonctionner ainsi que supplémentairement l'information d'instruction ou l'information de disponibilité à fonctionner transmise dans le dernier message.

11. Procédé suivant l'une des revendications précédentes, **caractérisé en ce que**
- au moins deux véhicules (SF1, SF2) ferroviaires circulent sur un tronçon de voie de l'installation (EBA) de chemin de fer et
- on transmet les messages entre les véhicules (SF1, SF2) ferroviaires.

12. Procédé suivant la revendication 11,
**caractérisé en ce que**
chaque véhicule (SF1, SF2) ferroviaire transmet à respectivement l'autre véhicule (SF1, SF2) ferroviaire, dans chaque message à un autre véhicule (SF1, SF2) ferroviaire, respectivement une information actuelle de véhicule ou une information actuelle de disponibilité à fonctionner ainsi que supplémentairement l'information de véhicule ou l'information de disponibilité à fonctionner transmise dans le dernier message.

13. Procédé suivant l'une des revendications précédentes,
**caractérisé en ce que**
dans chaque message on transmet respectivement :
- l'information (Ia) actuelle,
- encore une fois l'information (Iv1) transmise comme information actuelle dans le message immédiatement précédent et
- supplémentairement au moins encore une fois une information (Iv2), qui a été transmise comme information actuelle dans un autre message précédent.

14. Composant d'une installation (EBA) de chemin de fer,
**caractérisé en ce que**
le composant de chemin de fer est conformé de manière à :
• pouvoir envoyer des messages, dans lequel il transmet dans chaque message envoyé respectivement une information (Ia) actuelle et respectivement au moins encore une fois l'information (Iv1) transmise comme information actuelle dans le message immédiatement précédent,
• pouvoir obtenir des informations (Iv1) du côté du récepteur, qui ont été transmises d'abord incorrectement ou qui ne pouvaient pas être reçues ou au moins n'être reçues qu'incomplètement, à partir du message (Ia) suivant.

15. Composant de chemin de fer suivant la revendication 14,
**caractérisé en ce que**
le composant de chemin de fer est un poste (STW, STW1, STW2) d'aiguillage, un composant (S1 à S4, W1 à W3) sur la voie ou un véhicule (SF, SF1, SF2) ferroviaire.
